# EUROPEAN PATENT APPLICATION

(11) **EP 4 657 061 A2**
(43) Date of publication of application: **03.12.2025**
(21) Application number: 25180007.4
(22) Date of filing: 30.05.2025
(51) Int. Cl.: G01N 29/12, G01N 29/22, G01N 29/265

(54) **INSPECTION SCOPE WITH VIBRATION ISOLATOR FOR TRANSDUCER**

(30) Priority: 31.05.2024 US 202418680662
(71) Applicant: RTX Corporation, Farmington, CT 06032 (US)
(72) Inventor: CHEN, Yan, South Windsor, 06074 (US); SUN, Fanping, Glastonbury, 06033 (US); KOETSCH, Christopher, East Longmeadow, 01028 (US)
(74) Representative: Dehns

(57) **Abstract**

An inspection method is provided during which an inspection scope (28) is arranged with a component (22). The inspection scope (28) includes a transducer (40) and a vibration isolator (52). The arranging of the inspection scope (28) includes preloading the transducer (40) against the component (22) through the vibration isolator (52) where the transducer (40) contacts a surface of the component (22). Vibrations in the component (22) are induced using the transducer (40). A vibratory response in the component (22) excited by the vibrations is measured using the transducer (40) to provide sensor data.

## Description

### BACKGROUND OF THE DISCLOSURE

### 1. Technical Field

This disclosure relates generally to inspection and, more particularly, to non-destructive inspection for internal defects.

### 2. Background Information

Various systems and methods are known in the art for inspecting a component for internal defects. While these known inspection systems and methods have various benefits, there is still room in the art for improvement.

### SUMMARY OF THE DISCLOSURE

According to an aspect of the present disclosure, an inspection method is provided during which an inspection scope is arranged with a component. The inspection scope includes a transducer and a vibration isolator. The arranging of the inspection scope includes preloading the transducer against the component through the vibration isolator where the transducer contacts a surface of the component. Vibrations in the component are induced using the transducer. A vibratory response in the component excited by the vibrations is measured using the transducer to provide sensor data.

According to another aspect of the present disclosure, another inspection method is provided during which a head of an inspection scope is inserted into an interior of a powerplant. The head of the inspection scope includes a transducer and a support structure. The powerplant includes a component within the interior of the powerplant. The head of the inspection scope is arranged with the component within the interior of the powerplant. The arranging of the head of the inspection scope includes abutting the transducer against a surface of the component and transferring a force from the support structure to the transducer to preload the transducer against the surface of the component. Vibrations in the component are induced using the transducer while the transducer remains in contact with and is preloaded against the surface of the component. The transducer is vibrationally isolated from the support structure during the inducing of the vibrations. A vibratory response in the component excited by the vibrations is measured using the transducer to provide sensor data.

According to still another aspect of the present disclosure, a system is provided for inspecting a component within an interior of a powerplant. The system includes an inspection scope and a processing system. The inspection scope includes a scope head and a scope body that extends longitudinally along a centerline to the scope head. The scope head includes a transducer and a vibration isolator disposed between and vibrationally decoupling the transducer and the scope body. The inspection scope is configured for insertion of the scope head into the interior of the powerplant to abut the transducer against a surface of the component. The transducer is configured to induce vibrations in the component. The transducer is configured to measure a vibratory response in the component excited by the vibrations to provide sensor data. The processing system is configured to process the sensor data to determine a characteristic of the component based on the sensor data.

The following optional features may be applied to any of the above aspects.

The transducer may be configured as or otherwise include a piezoelectric device.

The transducer may be wholly connected to the scope body through the vibration isolator. The vibration isolator may be configured to damp vibrations with a frequency equal to or greater than thirty kilohertz. The inspection scope may be configured to apply a longitudinal force to the transducer through the vibration isolator to preload the transducer against the surface of the component.

The head of the inspection scope may also include a vibration isolator arranged between the transducer and the support structure. The vibration isolator may vibrationally isolate the transducer from the support structure during the inducing of the vibrations.

The transducer may be configured as or otherwise include a piezoelectric transducer.

The inspection scope may also include a support structure with the vibration isolator longitudinally between the support structure and the transducer. The vibration isolator may transfer a longitudinal force from the support structure to the transducer to preload the transducer against the component.

The vibration isolator may be bonded to the transducer.

The transducer may have a transducer stiffness. The vibration isolator may have an isolator stiffness that is less than the transducer stiffness.

The transducer stiffness may be equal to or greater than ten times the isolator stiffness.

The transducer stiffness may be equal to or less than one hundred times the isolator stiffness.

The vibration isolator may be configured as or otherwise include a polymer.

The vibration isolator may be configured to damp vibrations with a frequency equal to or greater than thirty kilohertz.

The inspection method may also include determining a characteristic of the component using the sensor data.

The inspection method may also include detecting a defect internal to the component using the sensor data.

The inspection method may also include inserting the inspection scope into an interior of a powerplant. The powerplant may include the component within the interior of the powerplant.

The powerplant may be configured as or otherwise include a turbine engine.

The component may be configured as a rotor disk.

The powerplant may be installed with an aircraft during the inserting, the arranging, the inducing and the measuring.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of a system for inspecting a component of a powerplant.
FIGS. 2A-C are schematic illustrations of a portion of the inspection system with the powerplant component, where an anchor of the inspection system is in various deployed arrangements.
FIG. 3 is a flow diagram of a method for inspecting a component of a powerplant.
FIGS. 4A-C are schematic illustrations of a portion of the inspection system with the powerplant component, where the anchor is in various stowed arrangements.
FIG. 5A is a graph of a vibration frequency compared to a measured response for a system with a vibration isolator.
FIG. 5B is a graph of a vibration frequency compared to a measured response for a system without a vibration isolator.
FIGS. 6A and 6B are graphs of various measured resonant signatures compared to a model resonant signature.

### DETAILED DESCRIPTION

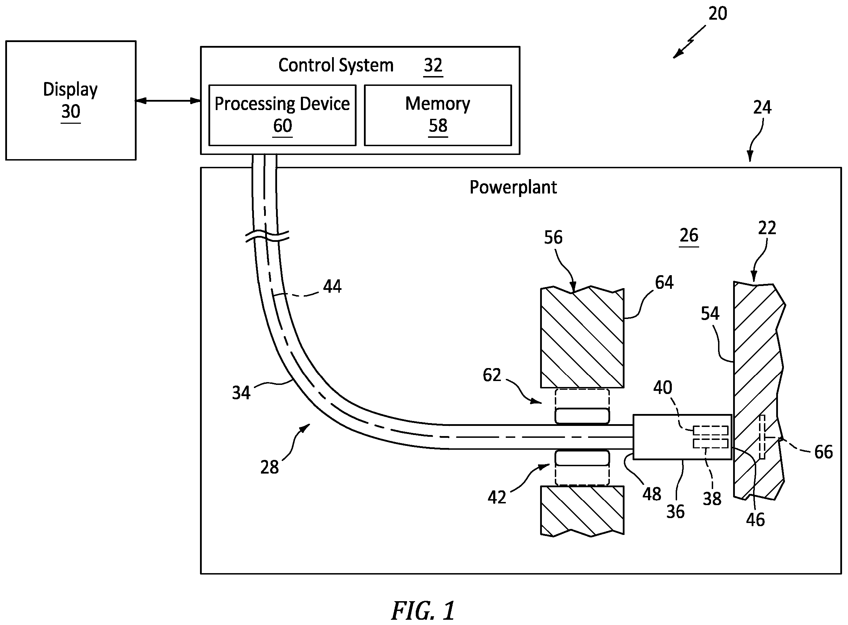

FIG. 1 illustrates a system 20 for non-destructive inspecting a component 22 of a powerplant 24 for an aircraft. The aircraft may be an airplane, a helicopter, a drone (e.g., an unmanned aerial vehicle (UAV)) or any other manned or unmanned aerial vehicle or system. The aircraft powerplant 24 may be configured as, or otherwise included as part of, a propulsion system for the aircraft. The aircraft powerplant 24, for example, may be a turbofan engine, a turbojet engine, a turboprop engine, a turboshaft engine, or any other type of gas turbine engine configured to generate thrust and/or drive rotation of a ducted or open propulsor rotor configured to generate thrust. The aircraft powerplant 24 may alternatively be configured as, or otherwise included as part of, a power generation system for the aircraft. The aircraft powerplant 24, for example, may be an auxiliary power unit (APU) or any other type of gas turbine engine configured to mechanically power operation of an electrical generator. The present disclosure, however, is not limited to such exemplary aircraft powerplants. The inspection systems and methods of the present disclosure, for example, may also be used for inspecting components of other types of internal combustion engines and/or components of various other types of power units; e.g., an electric machine, a hybrid-electric power unit, etc.

The inspection system 20 is configured to facilitate inspection of the powerplant component 22 while that powerplant component 22 remains installed with the aircraft powerplant 24 and, for example, while the aircraft powerplant 24 remains substantially or completely assembled. The powerplant component 22 of FIG. 1, for example, is disposed within an interior 26 (e.g., an enclosed volume, an encased volume, etc.) of the aircraft powerplant 24. The inspection system 20 is also configured to facilitate inspection of the powerplant component 22 while the aircraft powerplant 24 remains onboard the aircraft; e.g., remains installed on wing, on fuselage, in airframe, etc. The inspection of the powerplant component 22 may also be performed using the inspection system 20 while outside of an aircraft hangar and/or a dedicated inspection and/or repair facility; e.g., on a tarmac at an airport between aircraft flights. The inspection of the powerplant component 22 may thereby be performed with a relatively short aircraft downtime and/or a relatively minimal expense. The inspection system 20, of course, may also be used for inspecting the powerplant component 22 installed with the aircraft powerplant 24 when that aircraft powerplant 24 is not installed with the aircraft (e.g., prior to installation with the aircraft or following removal from the aircraft) and/or when the aircraft powerplant 24 is partially disassembled into one or more sub-assemblies.

The powerplant component 22 may be any inspectable (e.g., metal) component within the aircraft powerplant 24. However, for ease of description, the powerplant component 22 may be described below as a rotor disk of a bladed rotor within a gas turbine engine, and the aircraft powerplant 24 may be described below as the gas turbine engine. The rotor disk may be a turbine disk such as a rotor disk in a high pressure turbine (HPT) section or a low pressure turbine (LPT) section of the gas turbine engine. Alternatively, the rotor disk may be a compressor disk such as a rotor disk in a low pressure compressor (LPC) section or a high pressure compressor (HPC) section of the gas turbine engine. The present disclosure, however, is not limited to such exemplary powerplant component configurations. The powerplant component 22, for example, may alternatively be configured as a hub, a shaft or any rotating component within the aircraft powerplant 24.

The inspection system 20 may be configured as an inspection scope inspection system. The inspection system 20 of FIG. 1, for example, includes an electronic inspection scope 28, a display 30 and a control system 32. Examples of the display 30 include, but are not limited to, a screen, a monitor and/or a touch screen.

The inspection scope 28 may be configured as or otherwise include a borescope or another flexible or rigid elongated probe. The inspection scope 28 of FIG. 1, for example, includes a scope body 34 (e.g., a flexible tether), a scope head 36, a scope sensor 38 and a transducer 40; e.g., a vibration transducer. The inspection scope 28 may also include a scope anchor 42 such as, but not limited to, a fluidic and/or mechanically expandable mount for the inspection scope 28. The scope anchor 42 of FIG. 1 is schematically shown in a stowed arrangement by a solid line and in a deployed arrangement by the dashed line. Alternatively, the scope anchor 42 may be omitted where, for example, the scope head 36 and/or the scope body 34 are alternatively supported by a guide tube (e.g., a rigid tube) inserted into the interior 26 of the aircraft powerplant 24. However, for ease of description, the inspection scope 28 may be described below with the scope anchor 42.

The scope body 34 extends longitudinally along a longitudinal centerline 44 of the inspection scope 28 and its members 34 and 36 from a base end of the inspection scope 28 to the scope head 36. The scope body 34 is a flexible body. The scope body 34 may include one or more internal actuators for manipulating a configuration of the inspection scope 28 and its scope body 34 to aid in maneuvering the scope head 36 within the interior 26 of the aircraft powerplant 24 to the powerplant component 22.

The scope head 36 is disposed at a longitudinal distal end 46 of the inspection scope 28. The scope head 36 of FIG. 1, for example, extends longitudinally along the centerline 44 from a longitudinal proximal end 48 of the scope head 36 to the scope distal end 46 of the inspection scope 28; here, also a longitudinal distal end of the scope head 36. The scope sensor 38 and the transducer 40 are each arranged with (e.g., mounted to and/or disposed in) the scope head 36. The transducer 40 of FIG. 1 and, optionally, the scope sensor 38 are also each disposed at (e.g., on, adjacent or proximate) the scope distal end 46.

The scope sensor 38 is configured to aid in the maneuvering of the scope head 36 and, more particularly, the transducer 40 within the interior 26 of the aircraft powerplant 24 towards the powerplant component 22. The scope sensor 38, for example, may be configured as a camera (e.g., a still image camera and/or a video camera), a proximity sensor, or the like which (e.g., in real time) locates the scope head 36 and/or the transducer 40 during the maneuvering of the scope head 36, within the interior 26 of the aircraft powerplant 24, towards the powerplant component 22.

The transducer 40 may be configured as both an actuator (e.g., a vibration actuator) and a sensor (e.g., a vibration sensor). The transducer 40 of FIG. 1, for example, is configured to induce vibrations in the powerplant component 22 based on a control signal received from the control system 32. The transducer 40 is also configured to measure a vibratory response in the powerplant component 22 excited by the vibrations induced by that same transducer 40. The transducer 40 is further configured to provide sensor data (e.g., an output signal or signals) to the control system 32 indicative of the measured vibratory response.

The transducer 40 may be configured as or otherwise include a piezoelectric device. Examples of the piezoelectric device include, but are not limited to, a piezoelectric stack and a single crystal piezoelectric device. The piezoelectric stack may include a longitudinal stack (or multiple layers) of piezoelectric actuators. The single crystal piezoelectric device may include a piezoelectric ceramic element with a single crystal orientation and no grain boundaries. In general, the single crystal piezoelectric device may provide higher power and greater sensitivity than a comparable piezoelectric stack. The present disclosure, however, is not limited to the foregoing exemplary piezoelectric device configurations. Moreover, it is contemplated the transducer 40 may alternatively be configured as another type of electromechanical device operable to induce vibrations and then measure the vibratory response.

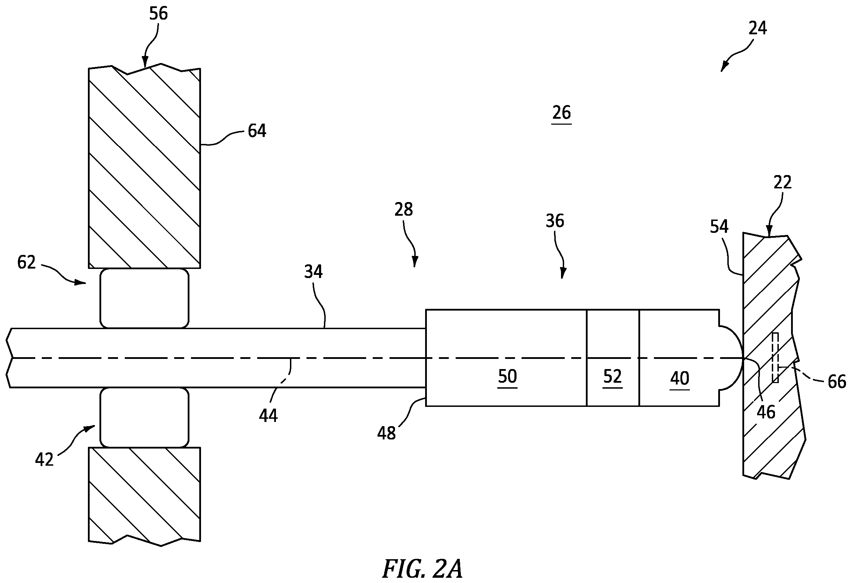

Referring to FIGS. 2A-C, the transducer 40 may be connected to a base 50 of the scope head 36 by a vibration isolator 52. The head base 50 forms a support structure for the transducer 40 and the vibration isolator 52. The head base 50 connects the transducer 40 and the vibration isolator 52 to the scope body 34. The vibration isolator 52 may be a sole structural link and may provide a sole load path between the transducer 40 and the head base 50. The vibration isolator 52 of FIGS. 2A-C, for example, extends longitudinally between, physically separates and may be attached (e.g., bonded) to a proximal end (e.g., a back end) of the transducer 40 and a distal end of the head base 50.

The vibration isolator 52 is configured to prevent or reduce transmission of vibrations induced by the transducer 40 into other parts of the inspection scope 28 such as, but not limited to, the head base 50, the scope body 34 and/or the scope anchor 42 (see FIG. 1). The vibration isolator 52, for example, may be configured to prevent or reduce the transmission of vibrations therethrough at the same frequency or frequency range as those vibrations to be induced in the powerplant component 22 for subsequent vibratory response measurement by the transducer 40. By way of example, where the transducer 40 induces vibrations in the powerplant component 22 at X hertz, then the vibration isolator 52 may be configured to prevent or reduce the transmission of vibrations therethrough also at X hertz, or within a frequency range that includes X hertz. However, the vibration isolator 52 may also be configured to transfer a longitudinal force from the head base 50 to the transducer 40 for preloading the transducer 40 against an exterior surface 54 of the powerplant component 22 as described below in further detail. Thus, the vibration isolator 52 should be flexible / compliant / soft enough to prevent or reduce the transmission of vibrations therethrough while stiff enough to facilitate preloading of the transducer 40 to maintain the preloaded contact between the transducer 40 and the powerplant component 22 during the inspection of the powerplant component 22.

The vibration isolator 52 is constructed from or may otherwise include an isolator material which facilitates vibration isolation and/or damping. This isolator material is selected to provide the vibration isolator 52 with a mechanical stiffness, k, which is less than a mechanical stiffness, k, of the transducer 40. Here, k may be equal to a force, F, exerted on a body divided by a displacement of the body, δ, produced by the force; i.e., k = F/ δ. This isolator stiffness may be one to two orders of magnitude less than the transducer stiffness. The transducer stiffness, for example, may be equal to or greater than ten times (10x) the isolator stiffness. The transducer stiffness, however, may be equal to or less than one hundred times (100x) the isolator stiffness. The isolator material may be a polymer or a composite with reinforcement (e.g., fibers, particles, etc.) embedded within a polymer matrix. Examples of the polymer / the polymer matrix include, but are not limited to, nylon, polyoxymethylene (e.g., Delrin), and low density polyethylene.

The scope anchor 42 may be disposed with and/or connected to the scope head 36. The scope anchor 42 may alternatively (or also) be disposed with and/or connected to the scope body 34, for example at the head proximal end 48 or otherwise near the scope head 36 and its head proximal end 48. The scope anchor 42 is configured to anchor the inspection scope 28 within the aircraft powerplant 24 to fix a position of the scope head 36 within the interior 26 of the aircraft powerplant 24 relative to the powerplant component 22. Moreover, the scope anchor 42 is configured to maintain engagement (e.g., contact and/or a preload) between the transducer 40 and the component surface 54, for example once the scope head 36 is in its fixed position next to the powerplant component 22 within the interior 26 of the aircraft powerplant 24. The scope anchor 42 of FIGS. 2A-C, for example, is configured to expand in size (e.g., lateral width, diameter, circumference, etc.) in order to engage another component 56 within the interior 26 of the aircraft powerplant 24 that is next to or near the powerplant component 22 to be inspected. This engagement may temporarily fixedly couple the inspection scope 28 and its members 34 and 36 to the second powerplant component 56 as described below in further detail.

Referring to FIG. 1, the control system 32 is configured in signal communication (e.g., hardwired and/or wirelessly coupled) with the inspection scope 28 and its scope members 38 and 40 as well as the display 30. The control system 32 of FIG. 1 may be in signal communication with the scope members 38 and 40 through one or more (e.g., electrically conductive and/or optical) signal paths extending within the scope body 34. The control system 32 may be implemented with a combination of hardware and software. The hardware may include memory 58 and at least one processing device 60, which processing device 60 may include one or more single-core and/or multi-core processors. The hardware may also or alternatively include analog and/or digital circuitry other than that described above.

The memory 58 is configured to store software (e.g., program instructions) for execution by the processing device 60, which software execution may control and/or facilitate performance of one or more operations such as those described below. The memory 58 may be a non-transitory computer readable medium. For example, the memory 58 may be configured as or include a volatile memory and/or a nonvolatile memory. Examples of a volatile memory may include a random access memory (RAM) such as a dynamic random access memory (DRAM), a static random access memory (SRAM), a synchronous dynamic random access memory (SDRAM), a video random access memory (VRAM), etc. Examples of a nonvolatile memory may include a read only memory (ROM), an electrically erasable programmable read-only memory (EEPROM), a computer hard drive, etc.

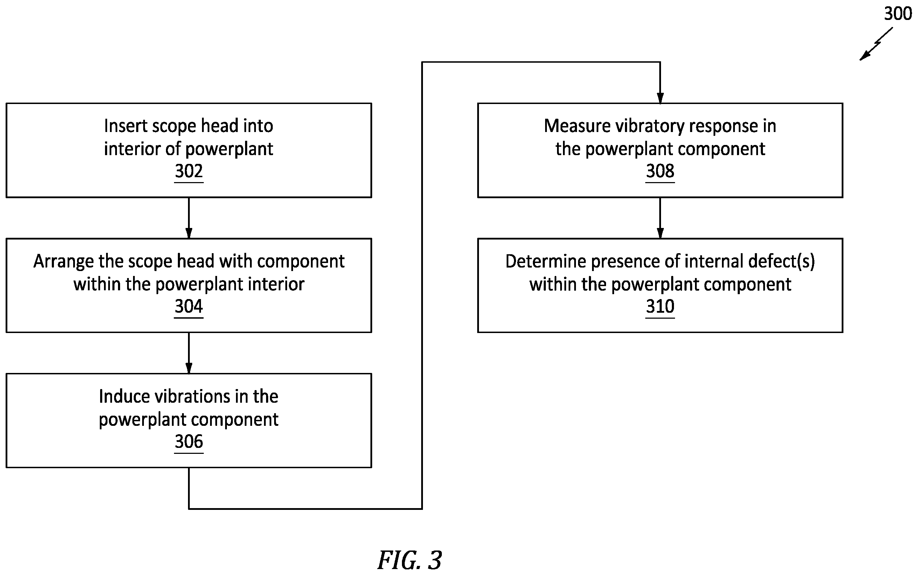

FIG. 3 is a flow diagram of a method 300 for inspecting the powerplant component 22 - a specimen component to be inspected. For ease of description, the inspection method 300 is described below with reference to the inspection system 20 of FIG. 1. The powerplant component 22 is also described below as being installed with the aircraft powerplant 24 and disposed within the interior 26 of the aircraft powerplant 24, where the aircraft powerplant 24 remains installed onboard the aircraft. The inspection method 300 of the present disclosure, however, may alternatively be performed with other inspection systems and/or while the aircraft powerplant 24 is removed from the aircraft and/or when the aircraft powerplant 24 is partially disassembled into one or more sub-assemblies.

In step 302, the scope head 36 is inserted into the interior 26 of the aircraft powerplant 24. An access cover, a powerplant component and/or the like, for example, may be removed from the aircraft powerplant 24 or opened to provide an access port into the interior 26 of the aircraft powerplant 24. The scope head 36 may then be passed through the access port into the interior 26 of the aircraft powerplant 24.

In step 304, the scope head 36 is arranged with the powerplant component 22 within the interior 26 of the aircraft powerplant 24. The inspection scope 28 and its scope head 36, for example, may be maneuvered to locate the scope head 36 next to the powerplant component 22. This maneuvering may include passing the scope head 36 through one or more passages, ducts, conduits, plenums, ports, etc. within the aircraft powerplant 24 until, for example, the scope head 36 is arranged next to an inspection location on the powerplant component 22. The inspection scope 28 and its scope head 36 may then be further maneuvered to push the transducer 40 up against the powerplant component 22 and its component surface 54 at the inspection location. For example, referring to FIGS. 2A-C, the transducer 40 may be abutted against the powerplant component 22, where the transducer 40 rigidly engages (e.g., contacts) the powerplant component 22 and its component surface 54 at the inspection location.

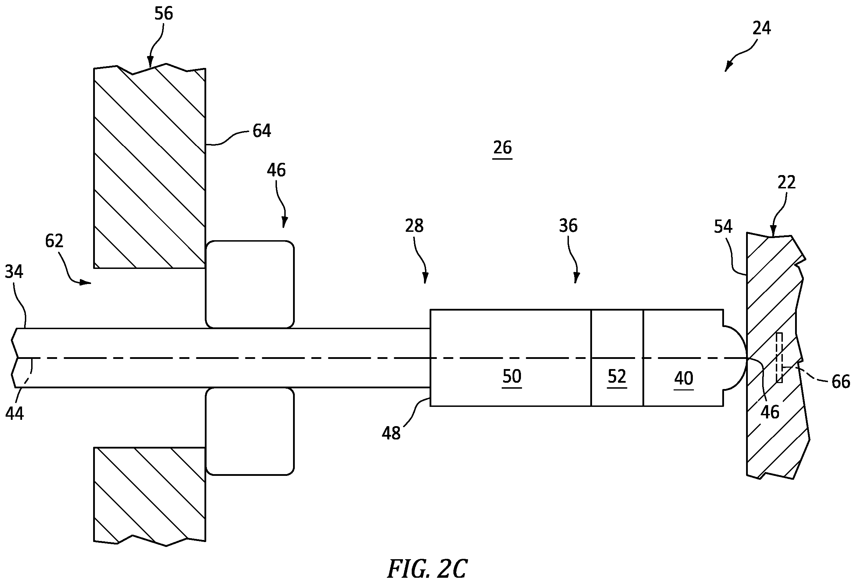

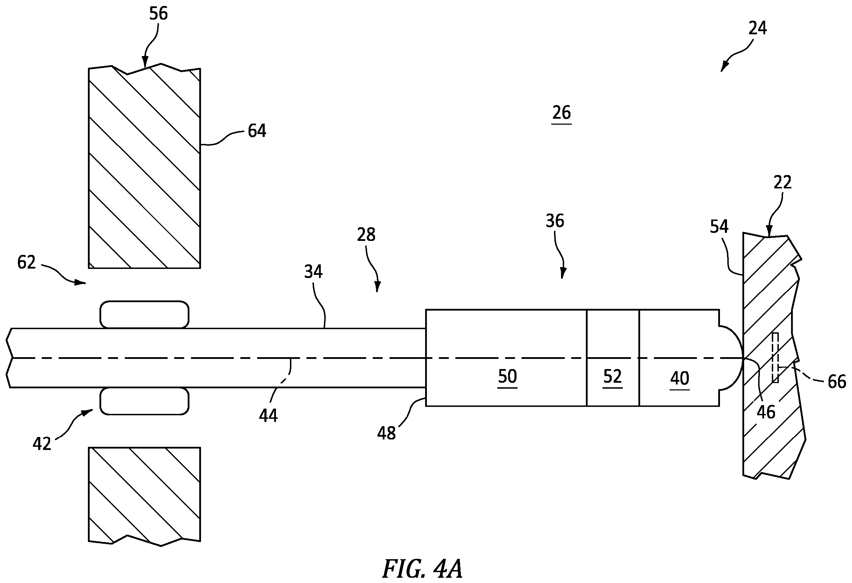

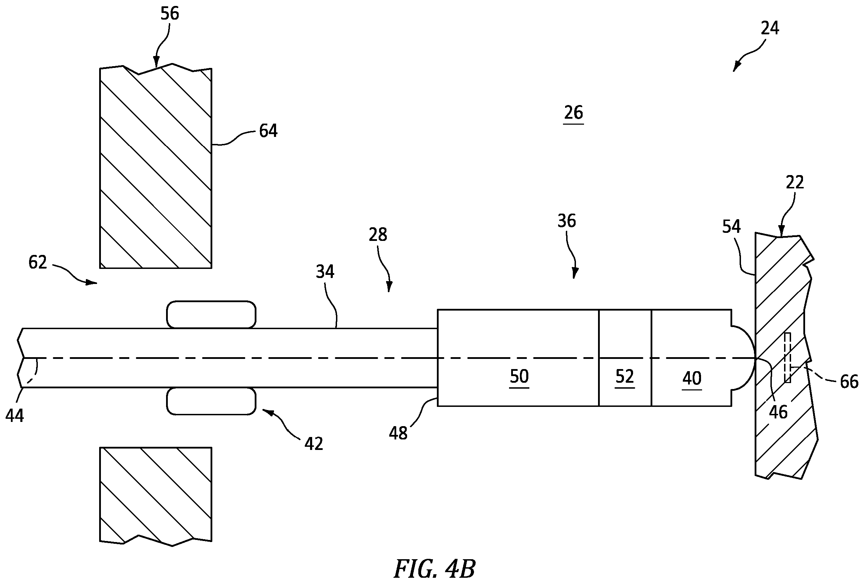

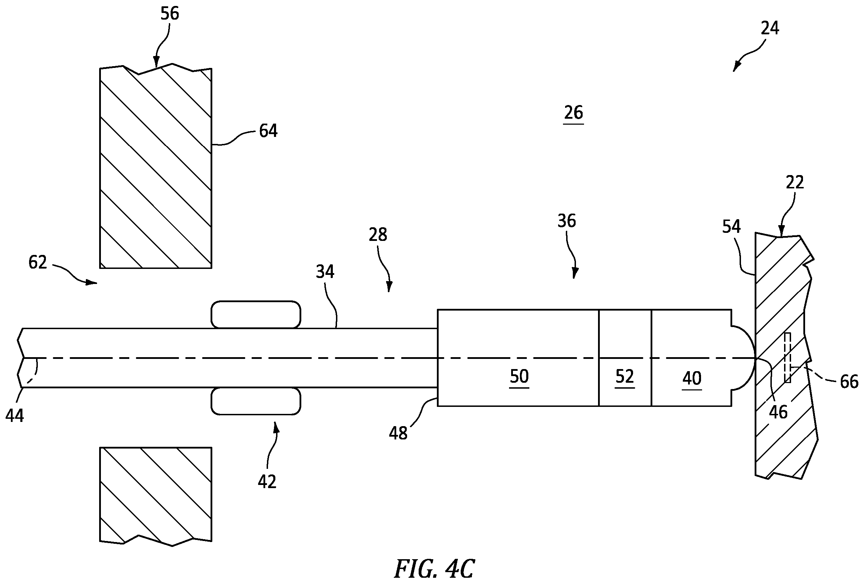

The position of the scope head 36 and its transducer 40 may then be fixed within the interior 26 of the aircraft powerplant 24 and relative to the powerplant component 22 using the scope anchor 42. For example, referring to FIG. 4A, the scope anchor 42 may be located within an aperture 62 in the second powerplant component 56 when the transducer 40 is abutted against the powerplant component 22 and its component surface 54. The scope anchor 42 may be expanded from the stowed arrangement (e.g., a retracted / contracted arrangement) of FIG. 4A to the deployed arrangement (e.g., an expanded arrangement) of FIG. 2A. In the deployed arrangement of FIG. 2A, the size of the scope anchor 42 is increased such that a radial outer periphery of the scope anchor 42 radially engages (e.g., contacts) a portion of the second powerplant component 56 forming the aperture 62. This engagement may center the inspection scope 28 and its inspection scope members 34 and 36 relative to the aperture 62. The engagement may also fix the position of the inspection scope 28 and its inspection scope members 34 and 36 relative to the aperture 62 through an interference fit. In another example, referring to FIG. 4B, the scope anchor 42 may be located partially within the aperture 62 and partially in a space between the powerplant components 22 and 56 when the transducer 40 is abutted against the powerplant component 22 and its component surface 54. With this arrangement, following the deployment (e.g., expansion) of the scope anchor 42, an interference fit is formed at the radial engagement between the scope anchor 42 and the second powerplant component 56. In addition, the scope anchor 42 may also axially abut against a side 64 of the second powerplant component 56 facing the powerplant component 22 and its component surface 54. The scope anchor 42 may thereby longitudinally lock a position of the inspection scope 28 and its members 34, 36 and 40 along the centerline 44. In still another example, referring to FIG. 4C, the scope anchor 42 may be located within the space between the powerplant components 22 and 56 when the transducer 40 is abutted against the powerplant component 22 and its component surface 54. With this arrangement, following the deployment (e.g., expansion) of the scope anchor 42, the scope anchor 42 of FIG. 2C may longitudinally lock the position of the inspection scope 28 and its members 34, 36 and 40 along the centerline 44.

In addition to the foregoing, the transducer 40 is preloaded against the powerplant component 22 and its component surface 54 through the vibration isolator 52 of FIGS. 2A-C. The preload may be equal to or greater than one or two pounds (1-2 lbs); e.g., between one and one-half pounds (1.5 lbs) and four and one-half pounds (4.5 lbs). The present disclosure, however, is not limited to such an exemplary preloads and may change based on transducer specifications.

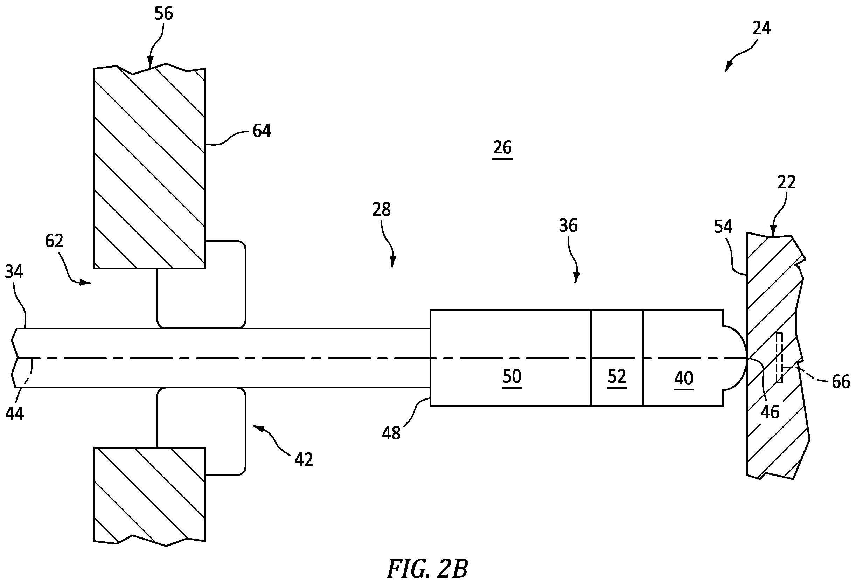

The preloading may occur during the abutting of the transducer 40 against the component surface 54. For example, in addition to placing the transducer 40 in contact with the component surface 54, the inspection scope 28 may be maneuvered to also exert some or all of the preload between the transducer 40 and the component surface 54. In another example, in addition to fixing the position of the scope head 36 and its transducer 40, the deployment of the scope anchor 42 may also push the transducer 40 longitudinally towards the powerplant component 22 (e.g., see FIGS. 2B and 2C) to also exert some or all of the preload between the transducer 40 and the component surface 54. In still another example, following the deployment of the scope anchor 42, it is contemplated the scope body 34 or the scope head 36 may include another device (e.g., a longitudinal expansion joint) configured to further push the head base 50 and, thus, the vibration isolator 52 and the transducer 40 of FIGS. 2A-C towards the powerplant component 22 to exert some or all of the preload between the transducer 40 and the component surface 54.

In step 306, vibrations are induced in the powerplant component 22 using the transducer 40 at the inspection location. The control system 32, for example, may signal the transducer 40 to vibrate (e.g., via a control signal or provision of an electric voltage), and the vibration of the transducer 40 may be transmitted into the powerplant component 22 through the preloaded contact between the transducer 40 and the component surface 54. The vibrations may be induced to sweep across a range of frequencies during the step 306; e.g., a five kilohertz (5 kHz) range, a ten kilohertz (10 kHz) range, a twenty kilohertz (20 kHz) range, or any other suitable range which will facilitate mapping of a response signature as described below. By contrast, the vibration isolator 52 may prevent or reduce the transmission of the vibrations therethrough and into the other parts of the inspection scope 28.

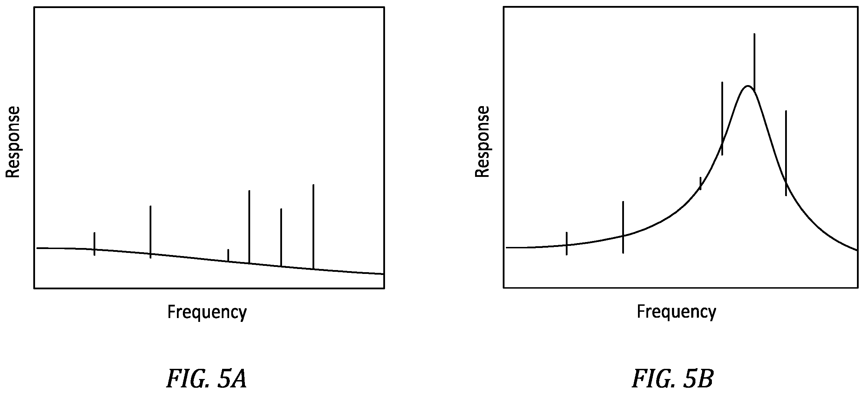

In step 308, a vibratory response is measured in the powerplant component 22 using the transducer 40 at the inspection location. This vibratory response is induced by the vibrations transmitted into the powerplant component 22 by the same transducer 40 which is measuring the vibratory response. The transducer 40 then generates the sensor data indicative of the measured vibratory response, and provides the sensor data to the control system 32. Here, the measured vibratory response may be substantially free of noise which may otherwise be present if the vibration isolator 52 was omitted. For example, FIG. 5A illustrates the measured vibratory response with the inclusion of the vibration isolator 52, whereas FIG. 5B illustrates the measured vibratory response without the vibration isolator 52. As can be seen in FIG. 5B, the vibrator response measured by the transducer 40 may also include noise, which noise may be or include a vibrator response also measured by the transducer 40 in other parts of the inspection scope 28. Thus, by including the vibration isolator 52 between the transducer 40 and the head base 50 of FIGS. 2A-C, the vibration isolator 52 may affectively mechanically filter out noise produced by the inspection scope 28.

In step 310, the sensor data is processed to determine whether or not the powerplant component 22 includes any internal defects 66 at and/or around the respective inspection location. Herein, the term "defect" may describe a physical anomaly present within a component which may negatively affect a useful life of that component and/or performance of that component. Examples of the internal defect(s) 66 include, but are not limited to, cracks, voids, corrosion, density variations, areas of poor solidification (e.g., sintering) and/or the like.

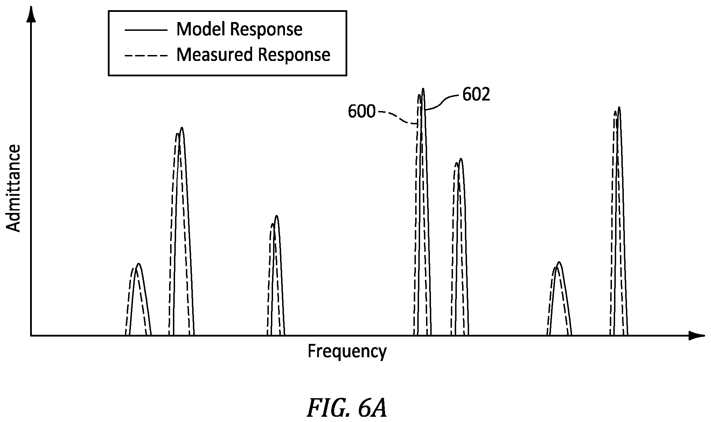

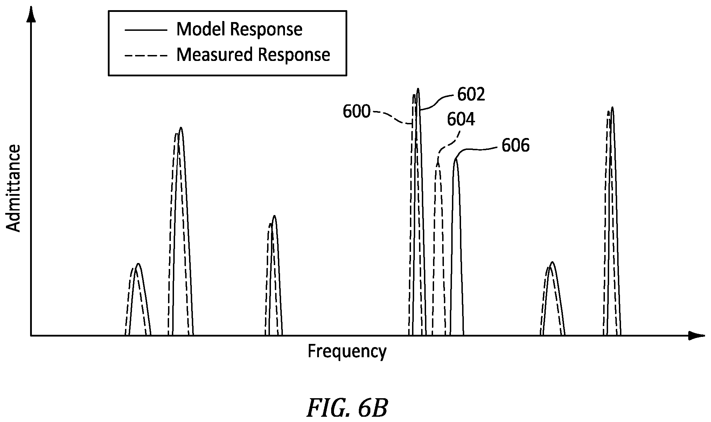

During the step 310, the control system 32 may analyze the measured vibratory response to determine resonant frequencies and/or other structural mode parameters for the powerplant component 22. Referring to FIG. 6A, where these resonant frequencies (or other structural mode parameters) match (or are within tolerance of) corresponding expected resonant frequencies (or other structural mode parameters) for a model component (e.g., a computer modeled component, a previously inspected component, etc.) without any internal defects, the control system 32 may determine the powerplant component 22 does not include, or there is a low probability that the powerplant component 22 includes, any internal defects. For example, a measured resonance signature 600 of the measured resonant frequencies in FIG. 6A is the same as, or is within tolerance of, a model resonance signature 602 of expected resonant frequencies for the model component without any internal defects. Note, the matching model and measured responses are shown in FIGS. 6A and 6B slightly laterally offset for clarity of illustration. By contrast referring to FIG. 6B, where one or more of the resonant frequencies and/or other structural mode parameters do not match (or are outside tolerance of) the corresponding expected resonant frequencies and/or other structural mode parameters for the model component without any internal defects, the control system 32 may determine the powerplant component 22 does include, or there is a high probability that the powerplant component 22 includes, one or more internal defects 66. For example, the resonance signature 600 of the measured resonant frequencies in FIG. 6B includes an outlier resonant frequency 604 which is different than (e.g., does not align with) and is outside of tolerance of a corresponding resonant frequency 606 for the resonance signature 602 of the expected resonant frequencies for the model component without any internal defects. In the foregoing example, the powerplant component 22 and the model component have a common (e.g., the same) configuration and, thus, may share a common manufacturer component identification such as the same part number, the same assembly number, etc. Using this methodology, the inspection method 300 and the inspection system 20 may non-destructively identify presence of internal defect(s) 66 within the powerplant component 22 while that powerplant component 22 remains installed with the aircraft powerplant 24 and/or the aircraft powerplant 24 remains installed onboard the aircraft.

When the step 310 identifies presence of no internal defects in material of the powerplant component 22, information indicative of such may be presented on the display 30. This information may simply identify the presence of no internal defects. The information may also or alternatively indicate the inspected powerplant component 22 meets / is within a component specification (e.g., a design specification) for that powerplant component 22. The aircraft powerplant 24 may then be identified as being ready for continued operation assuming, for example, no other regular scheduled maintenance tasks and/or inspections need to be performed. Similarly, when the step 310 identifies the presence of internal defect(s) 66, information indicative of such may be presented on the display 30. This information may simply identify the presence of internal defects 66. The information may also or alternatively indicate the inspected powerplant component 22 does not meet / is outside of the component specification for that powerplant component 22. Inspection personnel may then take appropriate next steps to further inspect the powerplant component 22 and/or initiate a process for swapping out the aircraft powerplant 24, repairing the powerplant component 22 or replacing the powerplant component 22. While the inspection method 300 is described above identifying whether or not the inspected powerplant component 22 includes any internal defects 66, this inspection method 300 may also (or alternatively) be extended to determine one or more other physical characteristics about the inspected powerplant component 22.

After performing the step 308 or 310, the inspection scope 28 may be removed from the interior 26 of the aircraft powerplant 24. Alternatively, the inspection scope member(s) 36 and 40 may be (e.g., slightly) retracted from the powerplant component 22 and its component surface 54. Thus, when the powerplant component 22 is rotatable (e.g., where the powerplant component 22 is the rotor disk), the powerplant component 22 may be rotated about its rotational axis to facilitate repeating the foregoing inspection method 300 at another inspection location. Whether removing the inspection scope 28, retracting the inspection scope member(s) 36 and 40 and/or otherwise adjusting the inspection scope 28, the scope anchor 42 may be stowed (e.g., retracted) from the deployed arrangement of FIGS. 2A-C to the stowed arrangement of FIGS. 4A-C. The inspection scope 28 may then be free to maneuver within the interior 26 of the aircraft powerplant 24 as needed.

In some embodiments, the vibrations induced in the powerplant component 22 during the step 306 may have a frequency equal to or greater than thirty kilohertz (30 kHz); e.g., equal to or greater than forty kilohertz (40 kHz) or fifty kilohertz (50 kHz) up to about two hundred kilohertz (200kHz) or two hundred and fifty kilohertz (250kHz). This frequency may be a lower bound, an upper bound or an intermediate frequency within the range of frequencies swept during the vibration inducement step 306. By vibrating the powerplant component 22 at such a relatively high frequency, the inspection method 300 and/or the inspection system 20 may detect one or more internal defects 66 with a dimension (e.g., a width, a length, etc.) equal to or less than one hundred mils (0.10 inches) or one hundred and fifty miles (0.15 inches). More particularly, the inspection method 300 and/or the inspection system 20 may detect one or more internal defects 66 with a relatively small dimension equal to or less than fifty mils (0.05 inches); e.g., equal to or less than forty mils (0.04 inches). Here, the powerplant component 22 is constructed from a metal. It is contemplated, however, the vibrations may alternatively be induced at a frequency below thirty kilohertz (30 kHz) when detecting larger internal defect(s) 66 within the powerplant component 22 and/or when inspecting a powerplant component with another material construction.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An inspection method, comprising:
arranging an inspection scope (28) with a component (22), the inspection scope (28) including a transducer (40) and a vibration isolator (52), the arranging of the inspection scope (28) comprising preloading the transducer (40) against the component (22) through the vibration isolator (52) where the transducer (40) contacts a surface of the component (22);
inducing vibrations in the component (22) using the transducer (40); and
measuring a vibratory response in the component (22) excited by the vibrations using the transducer (40) to provide sensor data.

2. The inspection method of claim 1, wherein the transducer (40) comprises a piezoelectric transducer (40).

3. The inspection method of claim 1 or 2, wherein:
the inspection scope (28) further includes a support structure (50) with the vibration isolator (52) longitudinally between the support structure (50) and the transducer (40); and
the vibration isolator (52) transfers a longitudinal force from the support structure (50) to the transducer (40) to preload the transducer (40) against the component (22).

4. The inspection method of claim 1, 2 or 3, wherein the vibration isolator (52) is bonded to the transducer (40).

5. The inspection method of any preceding claim, wherein:
the transducer (40) has a transducer stiffness; and
the vibration isolator (52) has an isolator stiffness that is less than the transducer (40) stiffness.

6. The inspection method of claim 5, wherein:
the transducer stiffness is equal to or greater than ten times the isolator stiffness; or
the transducer stiffness is equal to or less than one hundred times the isolator stiffness.

7. The inspection method of any preceding claim, wherein the vibration isolator (52) comprises a polymer.

8. The inspection method of any preceding claim, wherein the vibration isolator (52) is configured to damp vibrations with a frequency equal to or greater than thirty kilohertz.

9. The inspection method of any preceding claim, further comprising determining a characteristic of the component (22) using the sensor data.

10. The inspection method of any preceding claim, further comprising detecting a defect (66) internal to the component (22) using the sensor data.

11. The inspection method of any preceding claim, further comprising inserting the inspection scope (28) into an interior (26) of a powerplant (24), the powerplant (24) comprising the component (22) within the interior (26) of the powerplant (24),
wherein, optionally:
the powerplant (24) comprises a turbine engine; and/or
the component (22) is configured as a rotor disk; and/or
the powerplant (24) is installed with an aircraft during the inserting, the arranging, the inducing and the measuring.

12. An inspection method, comprising:
inserting a head (36) of an inspection scope (28) into an interior (26) of a powerplant (24), the head (36) of the inspection scope (28) including a transducer (40) and a support structure (50), and the powerplant (24) comprising a component (22) within the interior (26) of the powerplant (24);
arranging the head (36) of the inspection scope (28) with the component (22) within the interior (26) of the powerplant (24), the arranging of the head (36) of the inspection scope (28) comprising abutting the transducer (40) against a surface of the component (22) and transferring a force from the support structure (50) to the transducer (40) to preload the transducer (40) against the surface of the component (22);
inducing vibrations in the component (22) using the transducer (40) while the transducer (40) remains in contact with and is preloaded against the surface of the component (22);
vibrationally isolating the transducer (40) from the support structure (50) during the inducing of the vibrations; and
measuring a vibratory response in the component (22) excited by the vibrations using the transducer (40) to provide sensor data,
wherein, optionally, the head (36) of the inspection scope (28) further includes a vibration isolator (52) arranged between the transducer (40) and the support structure (50), and the vibration isolator (52) vibrationally isolates the transducer (40) from the support structure (50) during the inducing of the vibrations.

13. A system (20) for inspecting a component (22) within an interior (26) of a powerplant (24), the system (20) comprising:
an inspection scope (28) including a scope head (36) and a scope body (34) that extends longitudinally along a centerline (44) to the scope head (36), the scope head (36) including a transducer (40) and a vibration isolator (52) disposed between and vibrationally decoupling the transducer (40) and the scope body (34), the inspection scope (28) configured for insertion of the scope head (36) into the interior (26) of the powerplant (24) to abut the transducer (40) against a surface of the component (22), the transducer (40) configured to induce vibrations in the component (22), the transducer (40) configured to measure a vibratory response in the component (22) excited by the vibrations to provide sensor data; and
a processing system (20) configured to process the sensor data to determine a characteristic of the component (22) based on the sensor data.

14. The system (20) of claim 13, wherein the transducer (40) comprises a piezoelectric device.

15. The system (20) of claim 13 or 14, wherein:
the transducer (40) is wholly connected to the scope body (34) through the vibration isolator (52);
the vibration isolator (52) is configured to damp vibrations with a frequency equal to or greater than thirty kilohertz; and
the inspection scope (28) is configured to apply a longitudinal force to the transducer (40) through the vibration isolator (52) to preload the transducer (40) against the surface of the component (22).
